# EUROPEAN PATENT SPECIFICATION

(11) **EP 1 416 456 B1**
(45) Date of publication and mention of the grant of the patent: **23.11.2005**
(21) Application number: 03255060.0
(22) Date of filing: 14.08.2003
(51) Int. Cl.: G07F 19/00, G06F 17/60, H04M 15/00, H04L 29/06

(54) **Methods for maintaining prepaid account information and for supporting transactions in an e-Commerce system**
Verfahren zur Verwaltung von Prepaid-Konten und zum Ausführen von Transaktionen in einem elektronischen Handelssystem
Méthode pour maintenir des informations d'un compte prépayé et pour exécuter des transactions dans une système de commerce électronique

(30) Priority: 31.10.2002 US 284626
(43) Date of publication of application: 06.05.2004
(73) Proprietor: LUCENT TECHNOLOGIES INC., Murray Hill, New Jersey 07974-0636 (US)
(72) Inventor: Bartter, William Dale, Gahanna Ohio 43210 (US); Cai, Yigang, Naperville Illinois 60565 (US); Rush, Allan Terry, Glendale Arizona 85302 (US); Rae, Brian Robertson, Bristol BS7 8SE (GB); Locher, Mark Raymond, Dublin Ohio 43017 (US); Sripathi, Sridhar, Delaware, Ohio 43035 (US)
(74) Representative: Watts, Christopher Malcolm Kelway

(56) References cited:
- EP-A- 1 096 809
- US-A1- 2002 062 249
- US-A1- 2002 143 655
- OFFER G: "The new age of IN: The intelligent server farm" INTERNET CITATION, vol. 1, 21 August 2000 (2000-08-21), pages 809-812, XP010526862
- FAN LIMIN; WANG JING; LIAO JIANXIN: "Mobile payment based on mobile commerce intelligent platform and mobile intelligent networks" INTERNATIONAL CONFERENCE ON TELECOMMUNICATIONS, vol. 1, 23 - 26 June 2002, pages 528-532, XP009021241
- PAYCIRCLE: "Paycircle User Scenarios" PAYCIRCLE WHITEPAPER, [Online] - 6 September 2002 (2002-09-06) pages 1-13, XP002262285 Retrieved from the Internet: <URL:http://www.paycircle.org/downloads/01 _download.htm> [retrieved on 2003-11-20]

## Description

### FIELD OF THE INVENTION

This invention relates generally to the field of electronic commerce (or "e-commerce) and, more particularly, to an intelligent network-based e-commerce system that incorporates prepaid service offerings.

### BACKGROUND OF THE INVENTION

Communication networks such as the Internet are known to interconnect communication devices spanning a large geographical area. Generally, the Internet (sometimes referred to as the World Wide Web) is a combination of local area networks (LANs) and wide area networks (WANs) that speak the same protocols, thereby allowing a variety of communication devices connected to the Internet to communicate with each other. The suite of protocols used on the Internet is known as Transmission Control (TCP)/Internet Protocol (IP) (or TCP/IP). Communication devices that may access the Internet include, for example, computers, cell phones, wireline phones, pagers, two-way radios and personal digital assistants (PDAs). The communication devices connect to the Internet using access technologies such as Ethernet, telephone wires, base radios, satellites or Asynchronous Transfer Mode (ATM) networks.

As is well known, users of communication devices connected to the Internet may surf through a variety of web sites hosted by business enterprises, government entities, financial and educational institutions and the like. Certain of these sites are known to offer goods or services for sale that may be purchased electronically by the Internet user (i.e., by performing point-and-click, keystrokes and the like via the user device). This type of sales transaction is known generally as electronic commerce, or e-commerce. As presently known, e-commerce transactions require the customer, having selected item(s) or service(s) for purchase, to enter a credit card number to effect payment. (Alternatively, the customer may have entered a credit card in an earlier transaction and the seller maintained a record of the card.) Thereafter, the seller verifies the credit card authorization, delivers the selected goods or service and obtains payment from the credit card company. The customer pays the credit card company some time later.

A problem that arises is that certain prospective e-commerce customers may not have a credit card yet may wish to purchase goods or services on the Internet. These customers may include, for example, minors, persons from cash-based economies, persons who are not likely to pass credit checks or persons who disfavor credit cards. This is a huge potential market that is presently untapped by e-commerce merchants. To tap this market, it would be desirable for network-based merchants to offer "prepaid" service to such customers, such that the customers from all walks of life may pay up front for a certain level of goods or services (rather than paying a bill some time later as in conventional e-commerce transactions), giving the customer the opportunity to perform e-commerce transactions until such time as the credit level in the prepaid account is deleted. Prepaid services offerings are known for voice telecommunications but to date have not been available for e-commerce transactions.

US-A-2002/062249 describes an on-line, interactive, and fully integrated benefit-driven value exchange and settlement program that is concerned with maximizing benefits/awards, such as frequent flier awards or other incentive awards, associated with conventional credit card transactions. To that end, it provides a mechanism for informing buyers which credit card(s) to use to obtain the best benefits, while taking into account varying preferences of individual buyers.

EP-A-1 096 809 pertains to a system and method for providing IN (intelligent network) services. In providing such services, INAP messages (INAP = Intelligent Network Application Part) are exchanged between service switching points of a telecommunication network and service control points (SCP).

### Summary of the Invention

A method and system according to the invention are as set out in the independent claims. Preferred forms are set out in the dependent claims.

### SUMMARY OF THE INVENTION

The system and method embodiments of the present invention provide an intelligent network-based e-commerce system that incorporates prepaid service offerings. The prepaid e-commerce service builds upon and is compatible with pre-existing prepaid voice telecommunication service offerings, allowing prepaid customers to perform telephony and other service transactions, including Internet-based prepaid purchases and/or point-of-sale-based prepaid purchases for any product or service, without requiring credit cards or contracts and without receiving monthly bills. The service is centralized such that customers may establish a single prepaid account (rather than multiple individual accounts), which account is accessible by multiple service providers and subscribers through a common gateway.

### BRIEF DESCRIPTION OF THE DRAWINGS

The foregoing and other advantages of the invention will become apparent upon reading the following detailed description and upon reference to the drawings in which:
FIG. 1 is a block diagram of an intelligent network-based e-commerce system that incorporates prepaid service offerings according to the present invention;
FIG. 2 is a flowchart of a method for authenticating a prepaid subscriber account in an intelligent network-based electronic commerce system;
FIG. 3 is a flowchart of a method for requesting the balance of a prepaid subscriber account in an intelligent network-based electronic commerce system;
FIG. 4 is a flowchart of a method for requesting a debit of a subscriber account in an intelligent network-based electronic commerce system;
FIG. 5 is a flowchart of a method for requesting direct credit of a subscriber account in an intelligent network-based electronic commerce system; and
FIG. 6 is a flowchart illustrating operation of an intelligent network-based e-commerce system by an end user.

### DESCRIPTION OF THE PREFERRED EMBODIMENT(S)

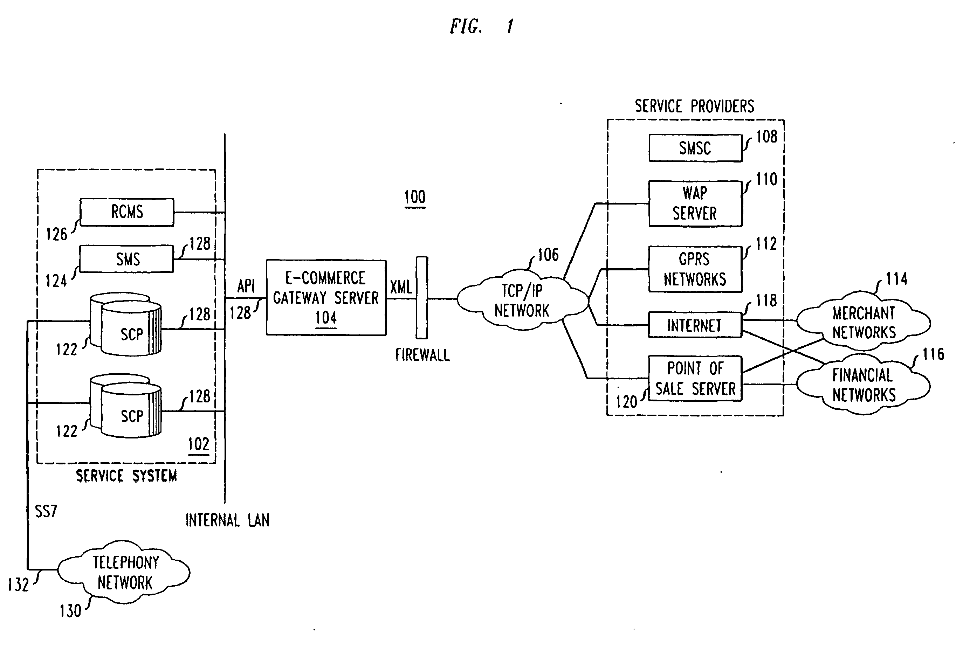

Turning now to the drawings and referring initially to FIG. 1, there is shown an intelligent network-based e-commerce system 100 according to one embodiment of the present invention. The e-commerce system 100 comprises a service system 102 connected via a gateway server 104 to a packet network 106 (as shown, a TCP/IP network). The packet network 106 interfaces to various e-commerce merchants and/or services (hereinafter termed "service providers") that may request access to the service system 102 to perform e-commerce transactions. As shown, the service providers include short message service center ("SMSC") 108, Web Application Platform (WAP) server 110, General Packet Radio Service (GPRS) networks 112, merchant networks 114 and financial networks 116. As shown, the merchant and financial networks 114, 116 access the service system via the Internet 118 or "point of sale" servers 120. Subscribers of the prepaid e-commerce service (i.e., e-commerce customers) may also access the service system via the Internet 118 or point of sale servers 120.

As will be appreciated, the service providers shown in the e-commerce system 100 do not represent an exhaustive list but generally depict a wide range of e-commerce options available to prepaid customers. The types of services that may be available from the service providers include, for example but not limitation, purchases of goods, movie tickets, telephony services, short message service, WAP service, Internet usage, Internet gaming and music or file uploads/downloads. The customer interacts with the service provider with communication devices (not shown) including but not limited to mobile phones, wireless hand-held devices, kiosks, point-of-service clients, Internet screens, etc.

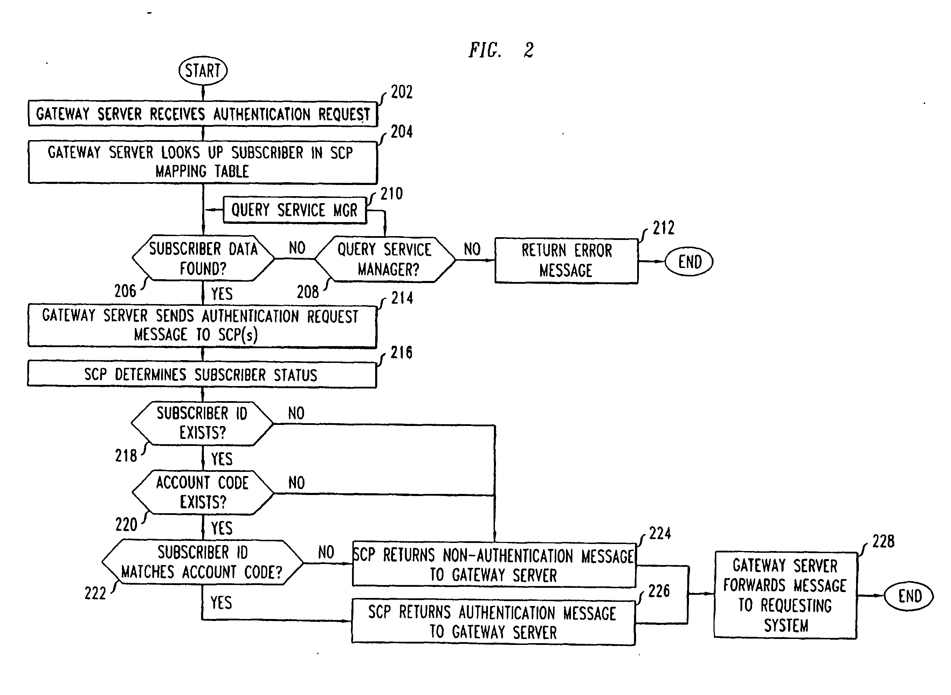

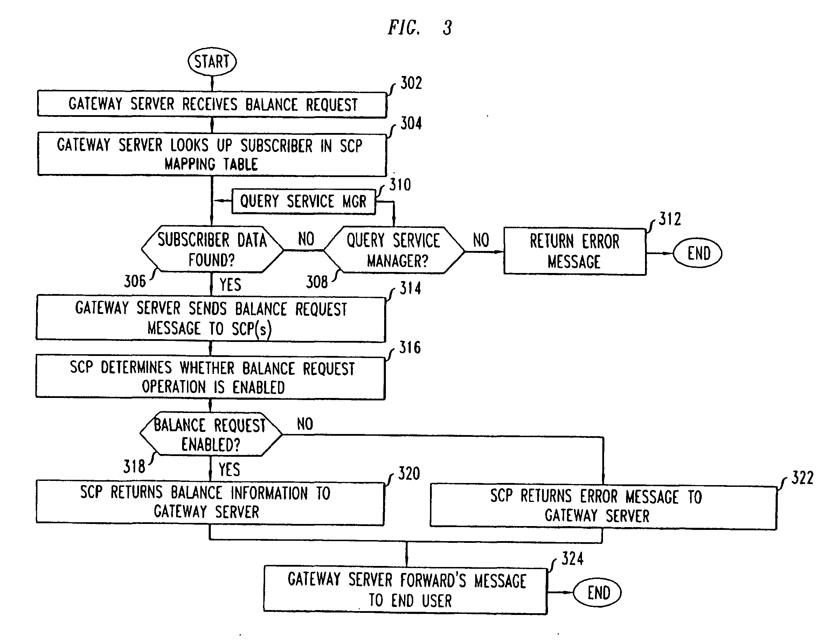

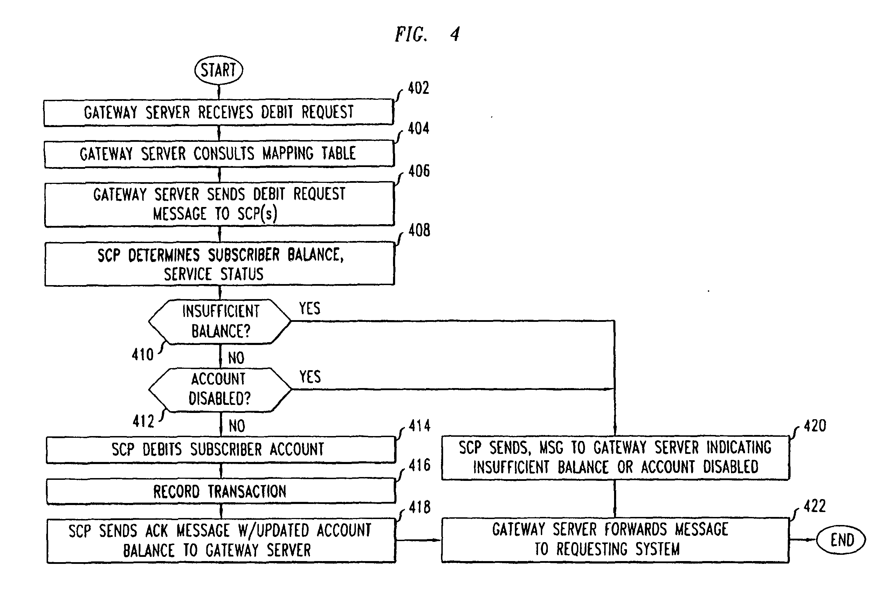

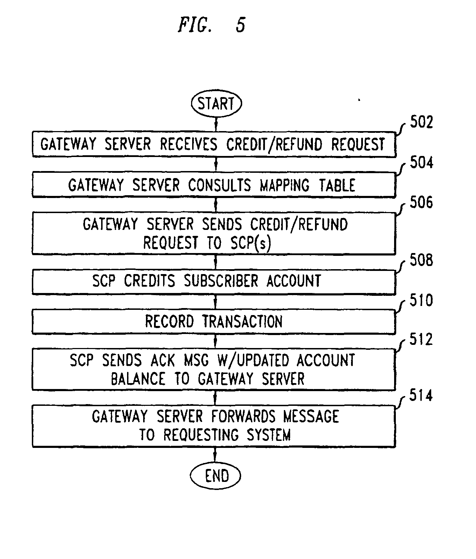

The service system 102 comprises a plurality of Service Control Points ("SCPs") 122, a service manager system ("SMS") 124 and a recharge card management system ("RCMS") 126. Each of these devices includes respective processors and memory (not shown) for effecting certain transactions relating to the services and capabilities of the service system 102. As will be described in greater detail later in this document, transactions supported by the service system 102 include authenticating prepaid subscriber accounts (FIG. 2), requesting balance of subscriber accounts (FIG. 3), requesting debit of a subscriber account (FIG. 4) and requesting credit of a subscriber account (FIG. 5).

The SCPs 122 maintain subscriber accounts and serve in the role of a "portal" to subscriber balance(s), thereby enabling service providers to access and modify subscriber account(s) in the course of e-commerce transactions. In one embodiment, a mated pair of SCPs is provided for purposes of redundancy; wherein for each subscriber, there is a designated "primary" SCP and "secondary" SCP.

The SCPs are connected to the gateway server 104 via links 128 (as shown, Application Programmable Interface (API) link(s)). One example of API link is Lightweight Directory Access Protocol (LDAP) developed by Lucent Technologies. The SCPs 122 are further connected to a telephony network 130 via links 132 (as shown, SS7 telephony signaling links) such that the service system 102 may support prepaid voice service for users of the telephony network 130 in addition to the services provided by the network-based service providers 108-120. The telephony network 130 may comprise a wired or wireline network using SS7 links.

The SMS 124 performs provisioning, administration and management functions for the service system 102. Generally, this includes generating and/or maintaining subscriber and service information associated with the service system 102 and downloading the information as required to the SCPs 122. The SMS 124 communicates with the SCPs via an API link 128 or TCP/IP interface (not shown) (e.g., CORBA over TCP/IP). More specifically, duties of the SMS 124 include: establishing new subscriber accounts and/or maintaining existing accounts (including subscriber IDs, credit amounts); mapping subscriber IDs to primary/secondary SCPs; identifying various attributes of the subscribers (for example, age, sex, language type, currency type, usage data, service preferences and/or restrictions); and generating comprehensive reports of account/usage information.

The RCMS 126 facilitates periodic recharging or replenishing of the subscriber accounts and communicating the recharging information as required to the SMS 124. The RCMS 124 communicates with the SMS 124 via an API link 128 or TCP/IP interface (not shown).

The gateway server 104 serves as an interface for service providers and/or subscribers to access the service system 102 (and hence, to access prepaid subscriber accounts) to facilitate e-commerce transactions. The gateway server 104 is a functional element that may reside in one or more physical devices. As shown, all network-based service providers 108-120 access the gateway server via the TCP/IP network 106, whereas the telephony network 130 may access the service system 102 directly, using SS7 protocol. The TCP/IP network 106 is adapted for transporting IP messages (or "datagrams") via one or more routers (not shown). As will be appreciated, alternative configurations are possible. For example, certain service providers 108-120 may interface directly to the gateway server 104 (i.e., via links/networks other than the TCP/IP network 106).

In one embodiment, messages are communicated between the gateway server and service providers 108-120 and/or subscribers using extensible Markup Language (XML). XML is the universal format for structured documents and data on the Web. The XML protocol thus gives service providers and subscribers a great deal of flexibility to access the subscriber account information. For example, service providers or subscribers may access the account information from Internet screens, point-of-sale computing devices, wireless devices or generally any device that is capable of communicating with the gateway server 104 via XML protocol. As will be appreciated, protocols other than XML could be used.

In one embodiment, the gateway server 104 performs three primary functions: protocol conversion for e-commerce operations, subscriber mapping to the SCP(s) and operations logging. The protocol conversion function comprises translating XML queries or transaction requests from service providers or subscribers into the API format supported by the service system 102; and conversely, translating API responses of the service system 102 to XML format for delivery to service providers 108-120 or subscribers. The mapping function comprises maintaining a database identifying the primary and secondary SCP for each subscriber for which an e-commerce transaction has been performed. For subscribers who are first-time users of the e-commerce system, the gateway server queries the SMS 124 to identify the primary and secondary SCP and thereafter maintains the information in a mapping table/database. Thereafter, upon receiving a query or transaction relating to a particular subscriber, the gateway server consults the mapping table to determine the primary and secondary SCP (hence, freeing the service provider and subscribers from such burden). Optionally, the gateway server may periodically delete mappings of subscribers who are inactive for a period of time. Moreover, the gateway server may periodically re-identify primary and secondary SCPs if/when failures occur in the originally identified primary or secondary SCPs. In one embodiment, if there is an automatic provisioning of new entries of subscribers on the gateway server via SMS (i.e, SMS automatically provisions new subscribers in the mapping table at the gateway), the gateway will return error message to the client systems when receiving an unrecognized subscriber ID in incoming requests. The logging function logs all requests and indicates the outcome (i.e., success or failure) of each request.

In one embodiment, the gateway server includes processor and memory (not shown) operable to support a subscriber base of one million customers. This performance level can be scaled/tuned depending on the scope of the e-commerce system 100.

FIGs. 2-6 are flowcharts showing various e-commerce transactions supported by the e-commerce system 100. These transactions include authenticating prepaid subscriber accounts (FIG. 2), requesting balance of subscriber accounts (FIG. 3), requesting debit of a subscriber account (FIG. 4); requesting credit of a subscriber account (FIG. 5); and operation of the e-commerce system by an end user (i.e., to perform an on-line purchase). The steps of FIG. 2-6 are implemented, where applicable, using stored software routines within the gateway server 104, SCP(s) 122 or SMS 128 of the e-commerce system 100.

Turning to FIG. 2, there is shown a flowchart illustrating a subscriber authentication operation according to one embodiment of the present invention. Generally, this operation is used to verify that a valid subscriber account exists in the e-commerce system 100. For example, a service provider may wish to receive subscriber authentication before delivering a chargeable service or goods to a prospective customer.

At step 202, the gateway server 104 receives a subscriber authentication request. The request may be received, for example, from any of the network-based service providers 108-120 who are considering an e-commerce transaction with a prospective customer. In one embodiment, the request includes a subscriber ID and account code associated with the prospective customer. In one embodiment, the request is an XML-protocol message.

In response to the request, at step 204, the gateway server 104 consults its mapping table to determine whether subscriber data is found corresponding to the subscriber ID and/or account code identified in the request. In one embodiment, this subscriber data includes an identification of primary or secondary SCP(s) of the e-commerce system. As will be appreciated, different service providers may have different ID(s) or account codes for the same subscriber depending on the different service providers naming/numbering schemes. For example, for a mobile wireless service provider, the subscriber ID could be a Mobile Station International Subscriber Directory Number (MSISDN) or Mobile Directory Number (MDN) depending on the service provider's network. In one embodiment, the mapping table includes a mapping of multiple ID(s) to individual subscriber(s), where applicable, to accommodate different subscriber ID(s)/account codes.

If subscriber data is not found, determined at step 206, the gateway server optionally queries the SMS, determined at step 208, to determine whether the SMS 124 can identify a primary and/or secondary SCP corresponding to the subscriber ID In response to a positive determination at step 208, the gateway server queries the SMS at step 210. In one embodiment, for example, the mapping table of the gateway server does not identify primary or secondary SCPs for first-time users. In such case, the gateway server may query the SMS to identify the primary and secondary SCP for the first-time user. The gateway server thereafter maintains the information in its mapping table.

If subscriber data is still not found after querying the SMS, or if the gateway server determines not to query the SMS at step 208, the gateway server returns an error message to the requesting system at step 212. Otherwise, if subscriber data is found (i.e., the gateway server identifies the primary and/or secondary SCP corresponding to the subscriber ID), the gateway server sends at step 214 an authentication request message to the designated SCP(s). In one embodiment, this comprises sending the subscriber ID and account code in appropriate API format to the primary SCP and, if no response is received within a predetermined time, to the secondary SCP. Alternatively, as will be appreciated, the gateway server may send the authentication request simultaneously to the primary and secondary SCPs. For convenience, the term "SCP" will hereinafter be understood to refer to the acting SCP, whether it be the primary or secondary SCP.

At step 216, the SCP determines the subscriber status of the prospective customer. In one embodiment, this comprises determining whether the subscriber ID exists (i.e., whether the subscriber ID corresponds to a valid subscriber); whether the account code exists (i.e., whether the account code corresponds to a valid account); and whether the subscriber ID matches the account code (i.e., the account belongs to the subscriber). If any of these conditions are negative, determined at decision blocks 218, 220, 222, the SCP returns a non-authentication message to the gateway server at step 224. Conversely, if each of the conditions are positive, the SCP returns an authentication message to the gateway server at step 226. The gateway server forwards the message to the requesting system at step 228 after appropriate conversion from API to XML format.

FIG. 3 is a flowchart showing a balance request operation according to one embodiment of the present invention. Generally, this operation is used for a subscriber to obtain the balance of his or her subscriber account(s) maintained by the e-commerce system 100. A subscriber may maintain one or more accounts.

At step 302, the gateway server 104 receives a balance request. In one embodiment, the request comprises an XML-format message including a subscriber ID and account code associated with the subscriber. It is presumed for purposes of example that the request is received from a subscriber. Alternatively or additionally, balance request(s) could be received by end users other than the subscriber such as service providers or representatives of the subscriber, as well as financial institutions, law enforcement officials and the like having authorized access to the subscriber ID and account code.

In response to the request, at step 304, the gateway server 104 consults its mapping table to determine whether subscriber data is found corresponding to the subscriber ID and/or account code identified in the request. In one embodiment, this subscriber data includes an identification of primary or secondary SCP(s) associated with the subscriber ID and/or account code.

If subscriber data is not found, determined at step 306, the gateway server optionally queries the SMS, determined at step 308, to determine whether the SMS 124 can identify a primary and/or secondary SCP corresponding to the subscriber ID. In response to a positive determination at step 308, the gateway server queries the SMS at step 310. If subscriber data is still not found after querying the SMS, or if the gateway server determines not to query the SMS at step 308, the gateway server returns an error message to the requesting system at step 312. Otherwise, if subscriber data is found (i.e., the gateway server identifies the primary and/or secondary SCP corresponding to the subscriber ID), the gateway server sends at step 314 a balance request message to the designated SCP(s).

At step 316, the acting SCP determines whether the balance request operation is enabled or disabled for the subscriber account. The enablement or disablement status of the account may be specified by the service system 102 by itself or responsive to subscriber instructions. For example, the balance request operation could be disabled by the service system 102 to facilitate balance requests by telephone rather than via the Internet; or the balance request operation could be enabled only for a particular requester or list of requesters responsive to subscriber instructions. The enablement or disablement status may vary for different accounts of the same subscriber.

If the balance request operation is enabled, determined at step 318, the SCP returns balance information associated with the subscriber account to the gateway server at step 320. Optionally, if the subscriber maintains multiple accounts, the balance information may include the balance of each of the accounts for which the balance request operation is enabled. If the balance request operation is disabled, the SCP returns an error message or some other indicia that the balance request operation is denied at step 322. Then, at step 324, the gateway server converts the message from API to XML format and forwards the balance information or error message to the subscriber or end user.

FIG. 4 is a flowchart showing a debit request operation according to one embodiment of the present invention. Generally, this operation is used for a service provider to debit the balance of a subscriber account responsive to an e-commerce transaction.

At step 402, the gateway server 104 receives a debit request from a service provider. The request may be received, for example, from any of the network-based service providers 108-120 who have delivered (or will deliver) goods or services to a customer responsive to an e-commerce transaction. For example, the request may be from a wireless network (e.g., via WAP, GPRS, etc.) or merchant via the Internet or point-of-sale server. In one embodiment, the request includes a subscriber ID, the amount of purchase and a merchant ID associated with the service provider. In one embodiment, the request is an XML-protocol message.

In response to the request, at step 404, the gateway server 104 consults its mapping table to determine primary and/or secondary SCP(s) associated with the subscriber ID, substantially as described in relation to FIG. 2. It is presumed for purposes of example that the gateway server is able to successfully identify the primary and/or secondary SCP at step 404. At step 406, the gateway server sends a debit request message to the designated SCP(s). In one embodiment, the debit request is in API format and includes parameters such as subscriber ID, account code, transaction ID, message type (i.e., debit request), account indicator, debit amount and currency indicator.

At step 408, the acting SCP determines the balance and service status associated with the subscriber account. In one embodiment, this comprises determining whether the balance is sufficient to accommodate the requested purchase (or sufficiently exceeds minimum balance thresholds, if applicable); and whether the account is enabled or disabled. If there is an insufficient balance or the account is disabled, determined at decision blocks 410, 412, the SCP returns an error message indicating insufficient balance or account disabled, as appropriate, to the gateway server at step 420. Conversely, if there is a sufficient balance and the account is enabled, the SCP debits the subscriber account at step 414, records the transaction into a Call Detail Record (CDR) at step 416 and sends an acknowledgment message to the gateway server at step 418 with the updated account balance. In one embodiment, the CDR includes parameters such as subscriber ID, account code, transaction ID, debit amount, currency indicator, account indicator and message type (i.e., debit request). The gateway server forwards the acknowledgment or error message, as appropriate, to the requesting system at step 422 after appropriate conversion from API to XML format.

FIG. 5 is a flowchart showing a credit request operation according to one embodiment of the present invention. Generally, this operation is used for a service provider to credit the balance of a subscriber account responsive to the customer returning goods, cancellation of purchase, overcharges and the like.

At step 502, the gateway server 104 receives a credit/refund request from a service provider. The request may be received, for example, from any of the service providers described in relation to FIG. 4 in relation to debit requests. In one embodiment, the request includes a subscriber ID and the amount to be credited to the subscriber account. In one embodiment, the request is an XML-protocol message.

In response to the request, at step 504, the gateway server 104 consults its mapping table to determine primary and/or secondary SCP(s) associated with the subscriber ID, substantially as described in relation to FIG. 2. It is presumed for purposes of example that the gateway server is able to successfully identify the primary and/or secondary SCP at step 504. At step 506, the gateway server sends a credit request message to the designated SCP(s). In one embodiment, the credit request is in API format and includes parameters such as subscriber ID, account code, transaction ID, message type (i.e., credit request), merchant identifier, account indicator, credit amount and currency indicator.

At step 508, the acting SCP credits the subscriber account and at step 510, the SCP records the transaction into a Call Detail Record (CDR). In one embodiment, the CDR includes parameters such as subscriber ID, account code, transaction ID, credit amount, currency indicator, account indicator, message type (i.e., credit request) and merchant identifier. At step 512, the SCP sends an acknowledgment message with the updated account balance to the gateway server. The gateway server forwards the acknowledgment message to the requesting system at step 514 after appropriate conversion from API to XML format.

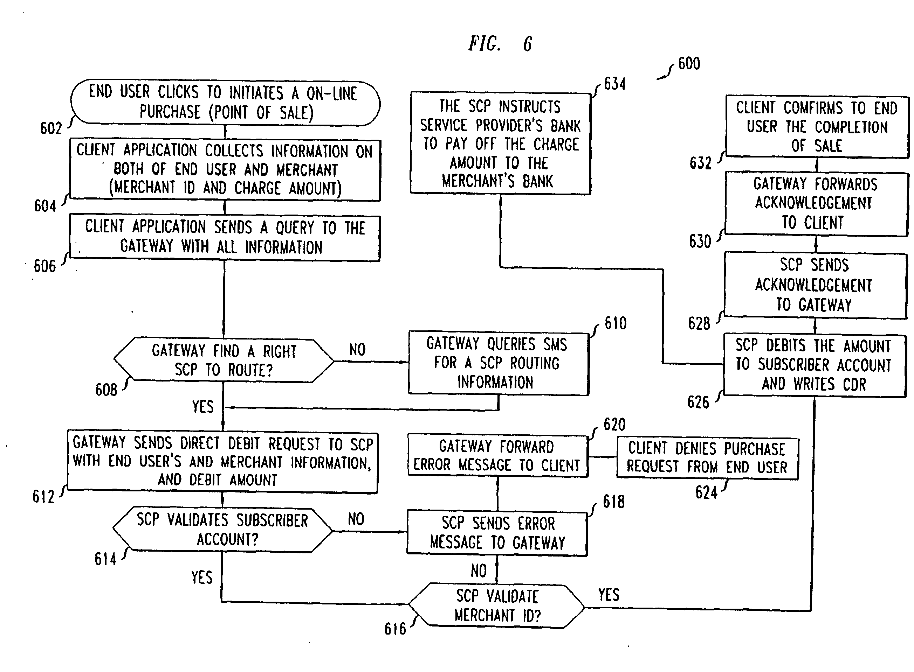

FIG. 6 is a flowchart illustrating operation of an intelligent network-based e-commerce system by an end user. For purposes of the present example, it is presumed the end user is accessing the e-commerce system via the Internet 118. Alternatively, as will be appreciated, the end user might access the system via wireless device/network.

At step 602, the end user clicks (e.g., on a web page icon) and executes keystrokes as may be appropriate to initiate an on-line purchase from an on-line merchant. At step 604, a client application (i.e., e-commerce software) collects information relevant to the purchase such as user ID, merchant ID, charge amount and the like. The client application may reside in a server operated by the merchant or by a centralized entity serving multiple merchants. At step 606, the client application sends a query to the gateway server 104 including the relevant information. In one embodiment, the query is in XML format.

At step 608, the gateway server 104 determines whether it is able to identify primary and/or secondary SCP(s) to which the request is to be routed. If not, the gateway server 104 queries the SMS 124 at step 610 substantially as has been described in relation to FIG. 2, 3. If the gateway server is able to successfully identify the primary and/or secondary SCP, the gateway server sends at step 612 a direct debit request message to the designated SCP(s). In one embodiment, the debit request is in API format and includes parameters such as subscriber ID, account code, transaction ID, message type (i.e., debit request), account indicator, debit amount and currency indicator.

At step 614, the acting SCP attempts to validate the subscriber account. In one embodiment, this comprises checking the sufficiency of balance and enablement status of the account substantially as described in relation to FIG. 4. If the account is not valid, the SCP returns an error message to the gateway server at step 618. The gateway server forwards the error message to the client at step 620 and the client denies the purchase request from the end user at step 624.

If the account is valid, the SCP attempts to validate the merchant ID at step 616. If the merchant ID is not valid, the SCP returns an error message to the gateway server at step 618. The gateway server forwards the error message to the client at step 620 and the client denies the purchase request from the end user at step 624. Otherwise, if the merchant ID is valid, the SCP debits the subscriber account and records the transaction into a Call Detail Record (CDR) at step 626 and sends an acknowledgment message to the gateway server at step 628. The gateway server forwards the acknowledgment to the client at step 630 and the client confirms the purchase (i.e., completes the sale) with the end user at step 632.

At step 626, to effect payment to the merchant, the SCP sends a message to its bank (i.e., the e-commerce service provider's bank) instructing it to pay off the charge amount to the merchant's bank (or alternatively, to the merchant). Generally, such payment occurs some time after completion of the transaction (e.g., at close of business) as is customary for banking transactions.

## Claims

1. A method of performing an electronic commerce transaction, for use in an electronic commerce system (100) comprising a service system (102) connected via gateway server (104) to a packet network (106), the electronic commerce system serving a plurality of service providers and customers (108-120) operably connected to the packet network, the method comprising:
receiving a request to perform an electronic commerce transaction; and
accessing customer account information to perform the electronic commerce transaction;
**characterized in that**
the customer account information comprises information associated with one or more prepaid accounts maintained by the service system, defining subscriber accounts;
the gateway server (104) maps the subscriber accounts to one or more service control points (122) of the service system (102); and
the service control points (122) support prepaid voice service for users of a telephony network (130), in addition to supporting electronic commerce transactions.

2. The method of claim 1, further comprising the step of:
the gateway server (104) translating the request from a first protocol used by the packet network (106) to a second protocol supported by the service system (102).

3. The method of claim 1, wherein the service system includes a service manager system (124) and a recharge card management system (126), the method comprising:
the service manager system establishing new and maintaining existing subscriber accounts; and
the recharge card management system facilitating periodic recharging of subscriber accounts and communicating recharging information to the service manager system.

4. The method of claim 1, wherein the electronic commerce transaction comprises authentication of a customer, the method comprising:
receiving an authentication request from a service provider, the authentication request including information associated with the customer;
accessing prepaid customer account information to determine a subscriber status of the customer, the subscriber status indicating whether the customer has a valid prepaid account maintained by the service system; and
based on the subscriber status, sending one of an authentication message and a non-authentication message to the service provider.

5. The method of claim 1, wherein the electronic commerce transaction comprises a balance request operation, the method comprising:
receiving a balance request from an end user, the balance request including at least one ofa subscriber ID and account code associated with a prepaid customer account;
accessing prepaid customer account information to determine an enablement status of the balance request operation;
if the balance request operation is enabled, obtaining balance information associated with the prepaid customer account and sending at least a portion of the balance information to the end user; and
if the balance request operation is disabled, sending an error message to the end user.

6. The method of claim 1, wherein the electronic commerce transaction comprises a debit request operation, the method comprising:
receiving a debit request from a service provider, the debit request including a debit amount, a subscriber ID and a merchant ID;
accessing prepaid customer account information to determine an enablement status of the debit request operation;
if the debit request operation is enabled, subtracting the debit amount from a customer account, yielding an updated account balance, and sending an acknowledgment message to the service provider; and
if the debit request operation is disabled, sending an error message to the service provider.

7. The method of claim 1, wherein the electronic commerce transaction comprises a credit request operation, the method comprising:
receiving a credit request from a service provider, the credit request including a credit amount and a subscriber ID;
accessing prepaid account information to add the credit amount to a customer account, yielding an updated account balance; and
sending an acknowledgment message to the service provider.

8. An electronic commerce system (100) comprising:
a gateway server (104) operably connected to a packet network (106), the packet network operably connected to a plurality of service providers and customers (108-120); and
a service system (102) operably connected to the gateway server,
**characterized in that**:
the gateway server (104) is adapted to serve as an interface for service providers and customers (108-120) to access the service system (102);
the service system (102) comprises a plurality of service control points (122);
the service control points connected to a telephony network (130) and adapted to support prepaid service to the users of the telephony network (130) in addition to supporting electronic commerce service to the service providers and customers (108-120).

9. The electronic commerce system of claim 8, wherein the service system (102) includes a service manager system (124) for establishing new and maintaining existing subscriber accounts.

10. The electronic commerce system of claim 9, wherein the service system (102) includes a recharge card management system (126) for periodically recharging subscriber accounts and communicating recharging information to the service manager system.

## Patentansprüche

1. Verfahren zur Durchführung einer E-Commerce-Transaktion zur Verwendung in einem E-Commerce-System (100) mit einem Dienstsystem (102), das über einen Gateway-Server (104) mit einem Paketnetzwerk (106) verbunden ist, wobei das E-Commerce-System mehrere Dienstanbieter und Kunden (108-120) versorgt, die operativ mit dem Paketnetzwerk verbunden sind, wobei das Verfahren die folgenden Schritte umfaßt:
Empfangen einer Anforderung, eine E-Commerce-Transaktion durchzuführen; und
Zugreifen auf Kunden-Account-Informationen zur Durchführung der E-Commerce-Transaktion;
**dadurch gekennzeichnet, daß**
die Kunden-Account-Informationen Informationen umfassen, die mit einem oder mehreren von dem Dienstsystem geführten Vorbezahlungs-Accounts assoziiert sind, die Teilnehmer-Accounts definieren;
der Gateway-Server (104) die Teilnehmer-Accounts auf einen oder mehrere Dienststeuerpunkte (122) des Dienstsystems (102) abbildet; und
die Dienststeuerpunkte (122) zusätzlich zu der Unterstützung von E-Commerce-Transaktionen Vorbezahlungs-Sprachdienst für Benutzer eines Fernsprechnetzwerks (130) unterstützen.

2. Verfahren nach Anspruch 1, ferner mit dem folgenden Schritt:
der Gateway-Server (104) übersetzt die Anforderung aus einem von dem Paketnetzwerk (106) benutzten Protokoll in ein von dem Dienstsystem (102) benutztes Protokoll.

3. Verfahren nach Anspruch 1, wobei das Dienstsystem ein Dienstmanagersystem (124) und ein Einzahlungskartenverwaltungssystem (126) enthält, wobei das Verfahren die folgenden Schritte umfaßt:
das Dienstmanagersystem erstellt neue und führt existierende Teilnehmer-Accounts; und
das Einzahlungskartenverwaltungssystem ermöglicht ein periodisches Einzahlen in die Teilnehmer-Accounts und ein Übermitteln von Einzahlungsinformationen zu dem Dienstmanagersystem.

4. Verfahren nach Anspruch 1, wobei die E-Commerce-Transaktion eine Authentifikation eines Kunden umfaßt, wobei das Verfahren die folgenden Schritte umfaßt:
Empfangen einer Authentifikationsanforderung von einem Dienstanbieter, wobei die Authentifikationsanforderung mit dem Kunden assoziierte Informationen enthält;
Zugreifen auf Vorbezahlungs-Kunden-Accountinformationen zur Bestimmung eines Teilnehmerstatus des Kunden, wobei der Teilnehmerstatus angibt, ob der Kunde ein von dem Dienstsystem geführtes gültiges Vorbezahlungs-Account besitzt; und
auf der Basis des Teilnehmerstatus, Senden einer Authentifikationsnachricht oder einer Nichtauthentifikationsnachricht zu dem Dienstanbieter.

5. Verfahren nach Anspruch 1, wobei die E-Commerce-Transaktion eine Kontostandanforderungsoperation umfaßt, wobei das Verfahren die folgenden Schritte umfaßt:
Empfangen einer Kontostandanforderung von einem Endbenutzer, wobei die Kontostandanforderung eine Teilnehmer-ID und/oder einen mit dem Vorbezahlungs-Kunden-Account assoziierten Account-Code enthält;
Zugreifen auf Vorbezahlungs-Kunden-Accountinformationen zur Bestimmung eines Freigabestatus der Kontostandanforderungsoperation;
wenn die Kontostandanforderungsoperation freigegeben ist, Erhalten von mit dem Vorbezahlungs-Kunden-Account assoziierten Kontostandinformationen und Senden mindestens eines Teils der Kontostandinformationen zu dem Endbenutzer; und
wenn die Kontostandanforderungsoperation gesperrt ist, Senden einer Fehlernachricht zu dem Endbenutzer.

6. Verfahren nach Anspruch 1, wobei die E-Commerce-Transaktion eine Abbuchanforderungsoperation umfaßt, wobei das Verfahren die folgenden Schritte umfaßt:
Empfangen einer Abbuchanforderung von einem Dienstanbieter, wobei die Abbuchanforderung einen Abbuchbetrag, eine Teilnehmer-ID und eine Händler-ID enthält;
Zugreifen auf Vorbezahlungs-Kunden-Accountinformationen zur Bestimmung eines Freigabestatus der Abbuchanforderungsoperation;
wenn die Abbuchanforderungsoperation freigegeben ist, Subtrahieren des Abbuchbetrags von einem Kunden-Account, wodurch sich ein aktualisierter Kontostand ergibt, und Senden einer Bestätigungsnachricht zu dem Dienstanbieter; und
wenn die Abbuchanforderungsoperation gesperrt ist, Senden einer Fehlernachricht zu dem Dienstanbieter.

7. Verfahren nach Anspruch 1, wobei die E-Commerce-Transaktion eine Gutschreibeanforderungsoperation umfaßt, wobei das Verfahren die folgenden Schritte umfaßt:
Empfangen einer Gutschreibeanforderung von einem Dienstanbieter, wobei die Gutschreibeanforderung einen Gutschreibebetrag und eine Teilnehmer-ID enthält;
Zugreifen auf Vorbezahlungs-Kunden-Accountinformationen zum Hinzufügen des Gutschreibebetrags zu einem Kunden-Account, wodurch sich ein aktualisierter Kontostand ergibt; und
Senden einer Bestätigungsnachricht zu dem Dienstanbieter.

8. E-Commerce-System (100), umfassend:
einen operativ mit einem Paketnetzwerk (106) verbundenen Gateway-Server (104), wobei das Paketnetzwerk operativ mit mehreren Dienstanbietern und Kunden (108-120) verbunden ist; und
ein operativ mit dem Gateway-Server verbundenes Dienstsystem (102),
**dadurch gekennzeichnet, daß**
der Gateway-Server (104) so ausgelegt ist, daß er als eine Schnittstelle für Dienstanbieter und Kunden (108-120) für den Zugriff auf das Dienstsystem (102) dient;
das Dienstsystem (102) mehrere Dienststeuerpunkte (122) umfaßt;
wobei die Dienststeuerpunkte an ein Fernsprechnetzwerk (130) angeschlossen sind und so ausgelegt sind, daß sie zusätzlich zu der Unterstützung von E-Commerce-Dienst für die Dienstanbieter und Kunden (108-120) Vorbezahlungs-Dienst für die Benutzer des Fernsprechnetzwerks (130) unterstützen.

9. E-Commerce-System nach Anspruch 8, wobei das Dienstsystem (102) ein Dienstmanagersystem (124) zum Erstellen neuer und zum Führen existierender Teilnehmer-Accounts enthält.

10. E-Commerce-System nach Anspruch 9, wobei das Dienstsystem (102) ein Einzahlungskartenverwaltungssystem (126) zum periodischen Einzahlen in Teilnehmer-Accounts und zum Übermitteln von Einzahlungsinformationen zu dem Dienstmanagersystem enthält.

## Revendications

1. Procédé d'exécution d'une transaction de commerce électronique, destiné à être utilisé dans un système de commerce électronique (100) comprenant un réseau indépendant (102) connecté par l'intermédiaire d'un serveur passerelle (104) à un réseau par paquets (106), le système de commerce électronique desservant une pluralité de fournisseurs de services et de clients (108 à 120) connectés opérationnellement au réseau par paquets, le procédé comprenant :
la réception d'une demande d'exécution d'une transaction de commerce électronique ; et
l'accès à des informations de comptes clients afin d'exécuter la transaction de commerce électronique ;
**caractérisé en ce que**
les informations de comptes clients comprennent des informations associées à un ou plusieurs comptes prépayés tenus à jour par le réseau indépendant, définissant des comptes d'abonnés ;
le serveur passerelle (104) met en correspondance les comptes d'abonnés avec un ou plusieurs points de commande de service (122) du réseau indépendant (102) ; et
les points de commande de service (122) supportent un service vocal prépayé pour les utilisateurs d'un réseau téléphonique (130), en plus de supporter des transactions de commerce électronique.

2. Procédé selon la revendication 1, comprenant en outre l'étape de :
traduction par le serveur passerelle (104) de la demande d'un premier protocole utilisé par le réseau par paquets (106) en un deuxième protocole supporté par le réseau indépendant (102).

3. Procédé selon la revendication 1, dans lequel le réseau indépendant comporte un système gestionnaire de services (124) et un système de gestion de cartes de réapprovisionnement (126), le procédé comprenant :
l'établissement de nouveaux comptes d'abonnés et le maintien de comptes d'abonnés existants par le système gestionnaire de services ; et
le réapprovisionnement périodique des comptes d'abonnés et la communication des informations de réapprovisionnement au système gestionnaire de services par le système de gestion de cartes de réapprovisionnement.

4. Procédé selon la revendication 1, dans lequel la transaction de commerce électronique comprend l'authentification d'un client, le procédé comprenant :
la réception d'une demande d'authentification émise par un fournisseur de services, la demande d'authentification comportant des informations associées au client ;
l'accès à des informations de comptes clients prépayés afin de déterminer un état d'abonné du client, l'état d'abonné indiquant si le client a un compte prépayé valable tenu à jour par le réseau indépendant ; et
en fonction de l'état d'abonné, l'envoi d'un message d'authentification ou d'un message de non-authentification au fournisseur de services.

5. Procédé selon la revendication 1, dans lequel la transaction de commerce électronique comprend une opération de demande de solde, le procédé comprenant :
la réception d'une demande de solde émise par un utilisateur final, la demande de solde comportant au moins l'un d'une ID et d'un code de compte d'abonné associé à un compte client prépayé ;
l'accès à des informations de comptes clients prépayés afin de déterminer un état de validation de l'opération de demande de solde ;
si l'opération de demande de solde est validée, l'obtention d'informations de solde associées au compte client prépayé et l'envoi d'au moins une partie des informations de solde à l'utilisateur final ; et
si l'opération de demande de solde est invalidée, l'envoi d'un message d'erreur à l'utilisateur final.

6. Procédé selon la revendication 1, dans lequel la transaction de commerce électronique comprend une opération de demande de débit, le procédé comprenant :
la réception d'une demande de débit émise par un fournisseur de services, la demande de débit comportant un montant de débit, une ID d'abonné et une ID de commerçant ;
l'accès à des informations de comptes clients prépayés afin de déterminer un état de validation de l'opération de demande de débit ;
si l'opération de demande de débit est validée, la soustraction de la quantité de débit d'un compte client, la production du solde actualisé du compte, et l'envoi d'un message d'accusé de réception au fournisseur de services ; et
si l'opération de demande de débit est invalidée, l'envoi d'un message d'erreur au fournisseur de services.

7. Procédé selon la revendication 1, dans lequel la transaction de commerce électronique comprend une opération de demande de crédit, le procédé comprenant :
la réception d'une demande de crédit émise par un fournisseur de services, la demande de crédit comportant un montant de crédit et une ID d'abonné ;
l'accès à des informations de comptes clients prépayés afin d'ajouter le montant de crédit à un compte client, produisant un solde actualisé du compte ; et l'envoi d'un message d'accusé de réception au fournisseur de services.

8. Système de commerce électronique (100) comprenant :
un serveur passerelle (104) connecté opérationnellement à un réseau par paquets (106), le réseau par paquets étant connecté opérationnellement à une pluralité de fournisseurs de services et de clients (108 à 120) ; et
un réseau indépendant (102) connecté opérationnellement au serveur passerelle,
**caractérisé en ce que** :
le serveur passerelle (104) est adapté pour servir d'interface entre les fournisseurs de services et les clients (108 à 120) afin d'accéder au réseau indépendant (102) ;
le réseau indépendant (102) comprend une pluralité de points de commande de service (122) ;
les points de commande de service étant connectés à un réseau téléphonique (130) et adaptés pour supporter la délivrance d'un service prépayé aux utilisateurs du réseau téléphonique (130) en plus de supporter la délivrance d'un service de commerce électronique aux fournisseurs de services et clients (108 à 120).

9. Système de commerce électronique selon la revendication 8, dans lequel le réseau indépendant (102) comporte un système gestionnaire de services (124) pour établir de nouveaux comptes d'abonnés et tenir à jour des comptes d'abonnés existants.

10. Système de commerce électronique selon la revendication 9, dans lequel le réseau indépendant (102) comporte un système de gestion de cartes de réapprovisionnement (126) pour réapprovisionner périodiquement les comptes clients et communiquer les informations de réapprovisionnement au système gestionnaire de services.
